# EUROPÄISCHE PATENTSCHRIFT

(11) **EP 0 813 765 B1**
(45) Veröffentlichungstag und Bekanntmachung des Hinweises auf die Patenterteilung: **16.09.1998**
(21) Anmeldenummer: 96905846.0
(22) Anmeldetag: 01.03.1996
(51) Int. Cl.: H02G 5/00

(54) **VORRICHTUNG ZUM ANSCHLUSS VON LEITUNGEN ODER GERÄTEN AN EINER STROMSAMMELSCHIENE EINES STROMSAMMELSCHIENENSYSTEMS**
DEVICE CONNECTING CONDUCTORS OR DEVICES TO A BUSBAR IN A BUSBAR SYSTEM
DISPOSITIF DE RACCORDEMENT DE CONDUCTEURS OU D'APPAREILS A UNE BARRE OMNIBUS D'UN SYSTEME DE BARRES OMNIBUS

(30) Priorität: 10.03.1995 DE 19508522
(43) Veröffentlichungstag der Anmeldung: 29.12.1997
(73) Patentinhaber: Rittal-Werk Rudolf Loh GmbH & Co. KG, 35745 Herborn (DE)
(72) Erfinder: WAGENER, Hans, D-35716 Dietzhölztal (DE)
(74) Vertreter: Fleck, Hermann-Josef, Dr.-Ing.
(86) Internationale Anmeldenummer: EP9600866
(87) Internationale Veröffentlichungsnummer: WO9628869

(56) Entgegenhaltungen:
- DE-A- 3 921 665
- DE-U- 8 804 509
- DE-U- 9 005 168
- FR-A- 2 010 347
- US-A- 3 210 716
- US-A- 4 030 794

## Beschreibung

Die Erfindung betrifft eine Vorrichtung zum Anschluß von Leitungen oder Geräten an eine Stromsammelschiene eines Stromsammelschienensystems, bei der die Stromsammelschiene n-eckigen Querschnitt aufweist und in ihre Außenseiten längsgerichtete, hinterschnittene Aufnahmenuten eingebracht sind.

Stromsammelschienen für große Ströme benötigen einen großen Querschnitt, der das Anschließen von Leitungen und Geräten in bekannter Art durch einfaches Aufstecken oder mittels einfacher Anschlußadapter nicht mehr zuläßt. Es sind daher schon Stromsammelschienen mit n-eckigem Querschnitt (n ≥ 3) in Erwägung gezogen worden, die in ihren Außenseiten längsgerichtete, hinterschnittene Aufnahmenuten tragen, wobei die Aufnahmenuten als T-Nuten ausgebildet sind, in welche elektrisch leitende Einsatzstücke einsetzbar sind (Vgl. US-A-4 030 794). Es ist Aufgabe der Erfindung, eine Vorrichtung der eingangs erwähnten Art zu schaffen, die unter Verwendung von derartigen n-eckigen Stromsammelschienen auf einfache Weise den Anschluß von Leitungen oder Geräten ermöglicht. Diese Aufgabe wird nach der Erfindung durch die Merkmale des Anspruchs 1 gelöst. Die Einsatzstücke sind an den hinterschnittenen, im Querschnitt rechteckförmigen Abschnitte der Aufnahmenuten angepaßt und erstrecken sich über einen Teil der Länge des Stromsammelschiene. Diese Einsatzstücke sind mit aus diesem Abschnitt herausgeführten Anschlußstücken versehen, an die Leiter direkt anschließbar oder Geräte mit Anschlußkontakten aufsteckbar sind.

Mit dem an den breiteren Abschnitt der als T-Nut ausgebildeten Aufnahmenut angepaßten Einsatzstück wird ein guter Kontakt zur Stromsammelschiene geschaffen. Das in den schmäleren Abschnitt der als T-Nut ausgebildeten Aufnahmenut ragende oder aus der Aufnahmenut ragende Anschlußstück bietet die Möglichkeit, Leitungen oder Geräte direkt anzuschließen.

Dadurch, daß die Einsatzstücke mit einem an den schmäleren Abschnitt als T-Nut ausgebildeten Aufnahmenuten angepaßten Anschlußstück versehen ist und daß Einsatzstück und Anschlußstück mit einer durchgehenden Gewindeaufnahme versehen sind, kann ein mit Kabelschuh versehene Leitung direkt am Anschlußstück und Einsatzstück angeschraubt werden. Dabei kann die Schraubverbindung gleichzeitig das Einsatzstück in dem breiteren Abschnitt der als T-Nut ausgebildeten Aufnahmenut verspannen, um einen eindeutigen elektrischen Kontakt mit kleinem Kontaktwiderstand zu erhalten.

Dadurch, daß die Einsatzstücke mit einem senkrecht aus der Aufnahmenut ragenden Steg versehen sind, und daß die Einsatzstücke neben dem Steg eine durchgehende Gewindeaufnahme aufweisen, die bei in die Aufnahmenut eingesetztem Einsatzstück zugänglich ist, können in bekannter Weise auf die aus den Aufnahmenuten ragenden Stege entsprechende Geräte aufgesteckt werden.

Damit die Einsatzstücke leicht in die Aufnahmenuten einsetzbar sind, kann nach einer Ausgestaltung vorgesehen sein, daß die Einsatzstücke an diagonalen Ecken mit Abrundungen versehen sind, deren Abstand an den schmäleren Abschnitt der als T-Nut ausgebildeten Aufnahmenuten abgestimmt ist.

Die als Anschlußstücke dienenden Stege haben gemäß einer weiteren Ausgestaltung eine Dicke, die kleiner ist als der schmälere Abschnitt der Aufnahmenuten.

Die Anordnung der Stege als Anschlußstück am Einsatzstück kann so vorgenommen sein, daß der Steg am Einsatzstück so angeformt ist, daß er bei eingesetztem Einsatzstück an einer Wand des schmäleren Abschnittes der als T-Nut ausgebildeten Aufnahmenut anliegt, oder daß der Steg am Einsatzstück so angeformt ist, daß er bei eingesetztem Einsatzstück mittig in den schmäleren Abschnitt der als T-Nut ausgebildeten Aufnahmenut angeordnet ist.

Die Ausgestaltung kann auch so erweitert sein, daß der Steg am freien Ende in einen rechtwinklig abgebogenen Haltesteg übergeht.

Die Einsatzstücke lassen sich auch als Verbinder für die Aneinanderreihung von Stromsammelschienen verwenden.

Die Erfindung wird anhand von verschiedenen, in den Zeichnungen im Schnitt dargestellten Ausführungsbeispielen näher erläutert. Es zeigen:
- Fig. 1: eine viereckige Stromsammelschiene mit Einsatzstücken zum direkten Anschrauben von mit Kabelschuhen versehenen Leitungen,
- Fig. 2: eine Stromsammelschiene mit Einsatzstücken, die einen Steg zum Aufstecken von mit entsprechenden Kontakten versehenen Geräten,
- Fig. 3: eine Stromsammelschiene mit als Verbinder ausgebildeten und verwendeten Einsatzstücken und
- Fig. 4: eine Stromsammelschiene mit unterschiedlichen Einsatzstücken.

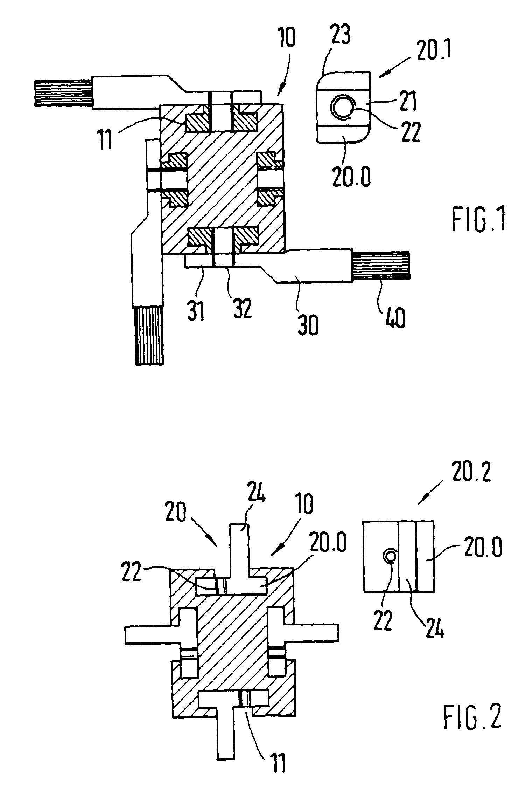

Die im wesentlichen rechteckförmige Stromsammelschiene 10 nach Fig. 1 trägt in allen vier Außenseiten längsgerichtete, als T-Nuten ausgebildete Aufnahmenuten 11. In diese Aufnahmenuten 11 werden Einsatzstücke 20.1 eingesetzt, die eine Basisplatte 20.0 aufweisen. Diese Basisplatte 20.0 ist mit der längeren Abmessung auf die Breite des breiteren Abschnittes der T-Nut abgestimmt, während sie in der kleineren Abmessung sich über einen Teil der Länge der Aufnahmenut 11 erstreckt. Die Oberseite der Basisplatte 20.0 trägt ein rechteckförmiges Anschlußstück 21, das mit der kürzeren Abmessung auf die Breite des schmäleren Abschnittes der Aufnahmenut 11 abgestimmt ist. Diese Anschlußstücke 20.1 können in entsprechender Position stirnseitig in die Aufnahmenuten 11 der Stromsammelschiene 10 eingeführt werden. Eine zentrische Gewindeaufnahme 22 geht durch das Anschlußstück 21 und die Basisplatte 20.0, so daß mit Kabelschuhen 30 versehene Leitungen 40 direkt angeschraubt werden können. Die Befestigungsschraube wird durch die Bohrung 32 in Befestigungsflansch 31 des Kabelschuhes 30 geführt und in die Gewindeaufnahme 22 eingeschraubt. Dabei wird die Basisplatte 20.0 in der Aufnahmenut 11 verspannt und somit eine eindeutige Verbindung hergestellt.

Wie mit den Abrundungen 23 an der Basisplatte 20.0 des Einsatzstückes 20.1 angedeutet ist, können diese auch quer zur Aufnahmnenut 11 eingeführt werden, wenn die diagonale Abmessung der Abrundungen 23 an die Breite des schmäleren Abschnittes der als T-Nut ausgebildeten Aufnahmenut 11 abgestimmt ist. Auch das Anschlußstück 21 muß dabei entsprechend dimensioniert werden.

Wie Fig. 2 zeigt, weisen die Einsatzstücke 20.2 auch einen Steg 24 als Anschlußstück zum Aufstecken von Geräten auf. Der Steg 24 ist an der Basisplatte 20.0 so angeformt, daß er im eingesetzten Zustand an einer Wand des schmäleren Abschnittes der Aufnahmenut 11 anliegt. Dabei entsteht neben dem Steg 24 ein ausreichender Platz für eine über die Aufnahmenut 11 zugängliche Gewindeaufnahme 22, wenn der Steg 24 eine Dicke aufweist, die kleiner ist als die Breite des schmäleren Abschnittes der Aufnahmenut 11. Mit einer Madenschraube wird die Basisplatte 20.0 in der Aufnahmenut 11 verspannt. Auf die Stege 24 werden, wie bei an sich bekannten Stromsammelschienensystemen mit hochkant stehenden, rechteckförmigen Stromsammelschienen mit entsprechenden Kontakten versehene Geräte aufgesteckt.

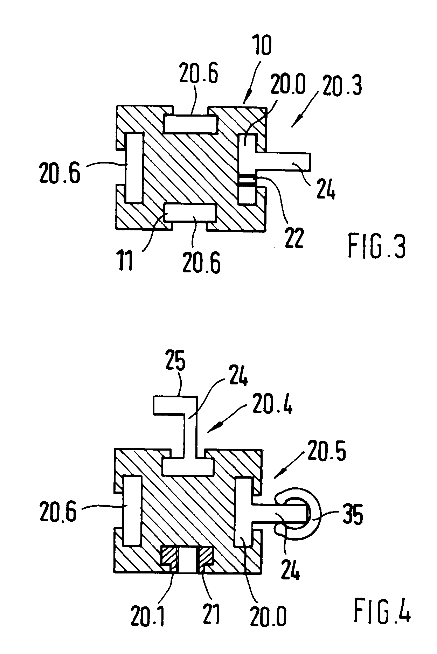

Bei der Stromsammelschiene 10 nach Fig. 3 ist ein Einsatzstück 20.3 in eine Aufnahmenut 11 eingesetzt, das den Einsatzstücken 20.2 nach Fig. 2 entspricht. In die übrigen Aufnahmenuten 11 sind Einsatzstücke 20.6 eingesetzt, die nur eine Basisplatte darstellen und mit (nicht dargestellt) zwei Gewindeaufnahmen versehen sind. Mit diesen als Verbinder verwendbaren Einsatzstücken 20.6 können aufeinanderstoßende Stromsammelschienen 10 miteinander verbunden werden. Dabei ragen die Einsatzstücke 20.6 je zur Hälfte in die angrenzenden Stromsammelschienen 10 und sind mit den in die Gewindeaufnahmen eingeschraubten Schrauben fest mit den Stromsammelschienen 10 verbunden.

Anhand der Fig. 4 wird gezeigt, daß bei einem Einsatzstück 20.5 der Steg 24 auch so angeformt sein kann, daß er in dem schmäleren Abschnitt der als T-Nut ausgebildeten Aufnahmenut 11 mittig angeordnet ist. Die Basisplatte 20.0 kann dabei in Längsrichtung über den Steg 24 hinaus verlängert sein und in den Verlängerungen Gewindeaufnahmen zum Verspannen der Basisplatte 20.0 in der Aufnahmenut 11 tragen. Mit 35 ist ein Kontakt eines aufsteckbaren Gerätes angedeutet.

Wie am Einsatzstück 20.4 gezeigt ist, kann das Ende des Steges 24 am Ende in einen rechtwinklig dazu stehenden Haltesteg 25 übergehen, an dem ein Gerät festgelegt werden kann. Die Aufnahmenuten 11 der Stromsammelschiene 10 sind im Ausführungsbeispiel nach Fig. 4 mit unterschiedlichen Einsatzstücken 20.1, 20.4, 20.5 und 20.6 belegt. Dies ist möglich, da alle Einsatzstücke eine Basisplatte 20.0 aufweisen, die an die Breite des breiteren Abschnittes der Aufnahmenuten 11 angepaßt sind.

## Patentansprüche

1. Vorrichtung zum Anschluß von Leitungen oder Geräten an eine Stromsammelschiene eines Stromsammelschienensystems, bei der die Stromsammelschiene n-eckigen Querschnitt (n ≥ 3) aufweist und in ihre Außenseiten längsgerichtete, als T-Nuten ausgebildete Aufnahmenuten eingebracht sind, und bei der in die Aufnahmenuten elektrisch leitende Einsatzstücke einsetzbar sind,
dadurch gekennzeichnet,
daß die Einsatzstücke (20.1 bis 20.5) an den hinterschnittenen, im Querschnitt rechteckförmigen Abschnitt der Aufnahmenut (11) angepaßt sind und sich über einen Teil der Länge der Stromsammelschiene (10) erstrecken,
daß zum Anschluß von Leitungen die Einsatzstücke (20.1) mit einem an den schmäleren Abschnitt der Aufnahmenut (11) angepaßten Anschlußstück (21) versehen sind, wobei Einsatzstück (20.1) und Anschlußstück (21) mit einer durchgehenden Gewindeaufnahme (22) versehen sind, oder
daß zum Anschluß von Geräten die Einsatzstücke (20.2, 20.3, 20.4, 20.5) mit einem Steg (24) als Anschlußstück versehen sind, der aus der Aufnahmenut (11) der Stromsammelschiene (20) herausragt, wobei neben dem Steg (24) eine durchgehende Gewindeaufnahme (22) vorgesehen ist, die bei eingesetztem Einsatzstück (20.2, 20.3, 20.4, 20.5) zugänglich ist.

2. Vorrichtung nach Anspruch 1,
dadurch gekennzeichnet,
daß die Einsatzstücke (20.1) an diagonalen Ecken mit Abrundungen (23) versehen sind, deren Abstand an den schmäleren Abschnitt der als T-Nut ausgebildeten Aufnahmenuten (11) abgestimmt ist.

3. Vorrichtung nach Anspruch 1 oder 2,
dadurch gekennzeichnet,
daß der Steg (24) eine Dicke aufweist, die kleiner als der schmälere Abschnitt der als T-Nut ausgebildeten Aufnahmenuten (11) ist.

4. Vorrichtung nach einem der Ansprüche 1 bis 3,
dadurch gekennzeichnet,
daß der Steg (24) am Einsatzstück (20.2, 20.3) so angeformt ist, daß er bei eingesetztem Einsatzstück (20.2, 20.3) an einer Wand des schmäleren Abschnittes der als T-Nut ausgebildeten Aunahmenut (11) anliegt.

5. Vorrichtung nach einem der Ansprüche 1 bis 4,
dadurch gekennzeichnet,
daß der Steg (24) am Einsatzstück (20.4, 20.5) so angeformt ist, daß er bei eingesetztem Einsatzstück (20.4, 20.5) mittig in den schmäleren Abschnitt der als T-Nut ausgebildeten Aufnahmenut (11) angeordnet ist.

6. Vorrichtung nach einem der Ansprüche 1 bis 5,
dadurch gekennzeichnet,
daß der Steg (24) am freien Ende in einen rechtwinklig abgebogenen Haltesteg (25) übergeht.

7. Vorrichtung nach einem der Ansprüche 1 bis 6,
dadurch gekennzeichnet,
daß Einsatzstücke (20.6) als Verbinder für die Aneinanderreihung von Stromsammelschienen (10) verwendet sind.

## Claims

1. Apparatus for connecting lines or appliances to a bus bar of a bus bar system, wherein the bus bar has an n-polygonal cross-section (n ≥ 3), and longitudinally orientated receiving grooves, which are configured as T-shaped grooves, are provided in the external surfaces of said bus bar, and wherein electrically conductive inserts are insertable into the receiving grooves, characterised in that the inserts (20.1 to 20.5) are adapted to the undercut portion of the receiving groove (11), which portion has a rectangular cross-section, and said inserts extend over a portion of the length of the bus bar (10), in that, for the connection of lines, the inserts (20.1) are provided with a connection portion (21), which is adapted to the narrower portion of the receiving groove (11), insert (20.1) and connection portion (21) being provided with a threaded receiver (22) traversing therethrough, or in that, for the connection of appliances, the inserts (20.2, 20.3, 20.4, 20.5) are provided with a web (24) as the connection portion, which protrudes from the receiving groove (11) of the bus bar (20), a continuous threaded receiver (22) being provided adjacent the web (24) and being accessible when the insert (20.2, 20.3, 20.4, 20.5) has been inserted.

2. Apparatus according to claim 1, characterised in that the inserts (20.1) are provided with rounded portions (23) at diagonal corners, the spacing between said rounded portions being adapted to the narrower portion of the receiving grooves (11), which are configured as a T-shaped groove.

3. Apparatus according to claim 1 or 2, characterised in that the web (24) has a thickness which is smaller than the narrower portion of the receiving grooves (11), which are configured as a T-shaped groove.

4. Apparatus according to one of claims 1 to 3, characterised in that the web (24) is moulded on the insert (20.2, 20.3) in such a manner that, when the insert (20.2, 20.3) has been inserted, said web abuts against a wall of the narrower portion of the receiving groove (11), which is configured as a T-shaped groove.

5. Apparatus according to one of claims 1 to 4, characterised in that the web (24) is moulded on the insert (20.4, 20.5) in such a manner that, when the insert (20.4, 20.5) has been inserted, said web is disposed centrally in the narrower portion of the receiving groove (11), which is configured as a T-shaped groove.

6. Apparatus according to one of claims 1 to 5, characterised in that the web (24) extends at its free end into a retaining web (25), which is bent at right angles.

7. Apparatus according to one of claims 1 to 6, characterised in that inserts (20.6) are used as connectors for the series-connection of bus bars (10).

## Revendications

1. Dispositif de raccordement de conducteurs ou d'appareils à une barre omnibus d'un système de barres omnibus, dans lequel la barre omnibus présente une section transversale à n angles (n > 3) et dans lequel des encoches de réception en forme de T sont pratiquées en direction longitudinale dans les côtés extérieurs de la barre, encoches de réception dans lesquelles peuvent être disposées des pièces d'insertion,
caractérisé
en ce que les pièces d'insertion (20.1 à 20.5) sont adaptées à la section en dépouille de forme rectangulaire de l'encoche de réception (11) et s'étendent sur une partie de la longueur de la barre omnibus,
en ce qu'aux fins du raccordement de conducteurs, les pièces d'insertion (20.1) sont dotées d'une pièce de connexion (21) adaptée à la section plus étroite de la pièce d'insertion (21), la pièce d'insertion (20.1) et la pièce de connexion (21) présentant un passage fileté continu (22), ou
en ce qu'aux fins du raccordement d'appareils, les pièces d'insertion (20.2, 20.3, 20.4, 20.5) sont dotées d'une nervure (24) en tant que pièce de connexion, nervure qui émerge de l'encoche de réception (11) de la barre omnibus (20), un passage fileté continu (22) étant prévu à côté de la nervure (24), passage qui est accessible lorsque la pièce d'insertion (20.2, 20.3, 20.4, 20.5) est mise en place.

2. Dispositif suivant la revendication 1,
caractérisé
en ce que les pièces d'insertion (20.1) présentent des arrondis (23) aux angles diagonalement opposés, arrondis dont la distance est harmonisée à la section plus étroite des encoches de réception (11) en forme de T.

3. Dispositif suivant la revendication 1 ou 2,
caractérisé
en ce que la nervure (24) présente une épaisseur qui est inférieure à la section plus étroite des encoches de réception (11) en forme de T.

4. Dispositif suivant l'une quelconque des revendications de 1 à 3,
caractérisé
en ce que la nervure (24) est formée sur la pièce d'insertion (20.2, 20.3) de manière telle que, lorsque la pièce d'insertion (20.2, 20.3) est mise en place, elle s'applique sur une paroi de la section plus étroite de l'encoche de réception (11) en forme de T.

5. Dispositif suivant l'une quelconque des revendications de 1 à 4,
caractérisé
en ce que la nervure (24) est formée sur la pièce d'insertion (20.4, 20.5) de manière telle que, lorsque la pièce d'insertion (20.4, 20.5) est mise en place, la nervure est disposée centralement dans la section plus étroite de l'encoche de réception (11) en forme de T.

6. Dispositif suivant l'une quelconque des revendications de 1 à 5,
caractérisé
en ce qu'à son extrémité libre, la nervure (24) se transforme en une nervure de support (25) coudée à angle droit.

7. Dispositif suivant l'une quelconque des revendications de 1 à 6,
caractérisé
en ce que des pièces d'insertion (20.6) servent de connecteurs pour l'accolement de barres omnibus (10).
